Europäisches Patentamt

European Patent Office

Office européen des brevets

(11) Publication number: 0 371 863 A1

# EUROPEAN PATENT APPLICATION

(21) Application number: 89403266.3

(51) Int. Cl.5: **B23K 20/16**

(22) Date of filing: 27.11.89

(30) Priority: 29.11.88 US 277620

(43) Date of publication of application:
06.06.90 Bulletin 90/23

(84) Designated Contracting States:
AT BE CH DE ES FR GB GR IT LI LU NL SE

(71) Applicant: MICROELECTRONICS CENTER OF NORTH CAROLINA
3021 Cornwallis Road Post Office Box 12889
Research Triangle Park North Carolina 27709(US)

Applicant: NORTHERN TELECOM LIMITED
P.O. Box 6123
Montreal Quebec H3C 3J5(CA)

(72) Inventor: Reisman, Arnold
816 Thatcher's Way
Raleigh North Carolina 27615(US)
Inventor: Nayak, Deepak
667 Leverning Avenue Apt. 1
Los Angeles California 90024(US)
Inventor: Turlik, Iwona
1401 Bridgeport Drive
Raleigh North Carolina 27615(US)

(74) Representative: Orès, Bernard et al
Cabinet ORES 6, Avenue de Messine
F-75008 Paris(FR)

(54) Metal-to-metal bonding method and resulting structure.

(57) A method and resulting structure is disclosed in which a metal-to-metal bond is formed by heating the surfaces (1,2) to be bonded in an oxidizing ambient atmosphere until the desired bond is achieved. Heating takes place at 600°C. - 1150°C. and bonding may be enhanced by applying pressure between the surfaces while heating.

_Fig. 1a._

## METAL-TO-METAL BONDING METHOD AND RESULTING STRUCTURE

Field of the Invention

This invention relates to bonding of surfaces and more specifically to the bonding of metal surfaces.

Background of the Invention

Many techniques are known for bonding metal surfaces. For example, soldering, brazing and welding are commonly used. These methods employ a variety of temperatures, bonding materials and bonding conditions. Notwithstanding this variety, there is a continuing need for improved metal-to-metal bonding techniques.

A common problem faced by existing techniques is the removal of residual oxide coatings on the surfaces to be bonded. Numerous patents teach that a stronger bond is obtained when the metal surfaces to be bonded are free of oxides. For example, U.S. Patent No. 4,732,312 to Kennedy, et al. teaches the removal of surface oxides when diffusion bonding. U.S. Patent No. 4,704,512 to Lisec teaches removal of oxides when welding, and U.S. Patent No. 4,245,768 to Sater removes surface oxides when welding metals using ion beam technology.

Summary of the Invention

In accordance with the foregoing, it is therefore an object of the present invention to provide an improved technique for bonding metals.

It is another object of the present invention to provide an improved bonded metal-to-metal structure.

These and other objects of the present invention are accomplished by placing the metal surfaces to be bonded in contact and heating in an oxidizing atmosphere to thereby form an oxide bond between the metals. In one embodiment a surface oxide is formed on each surface to be bonded, before bringing the surfaces into contact and heating. In either case, according to the invention, oxide is used to form a high quality bond between surfaces, in contrast with the prior art, which regarded oxide as an undesirable impurity which must be removed to create a high quality bond.

Description of the Drawings

Figures 1a - 1c are cross sectional views illustrating a metal to metal bonding method according to the invention.

Figures 2a - 2c are cross sectional views illustrating an alternative metal to metal bonding method according to the invention.

Figure 3 illustrates a cross section of a quartz carrier which may be used during the bonding process of Figures 1 or 2.

Figures 4a - 4c are photographs of metal to metal bonded structures according to the present invention.

Detailed Description of the Invention

The present invention now will be described more fully hereinafter with reference to the accompanying drawings, in which preferred embodiments of the invention are shown. This invention can, however, be embodied in many different forms and should not be construed as limited to the embodiments set forth herein; rather, applicants provide these embodiments so that this disclosure will be thorough and complete, and will fully convey the scope of the invention to those skilled in the art.

Like characters refer to like elements throughout.

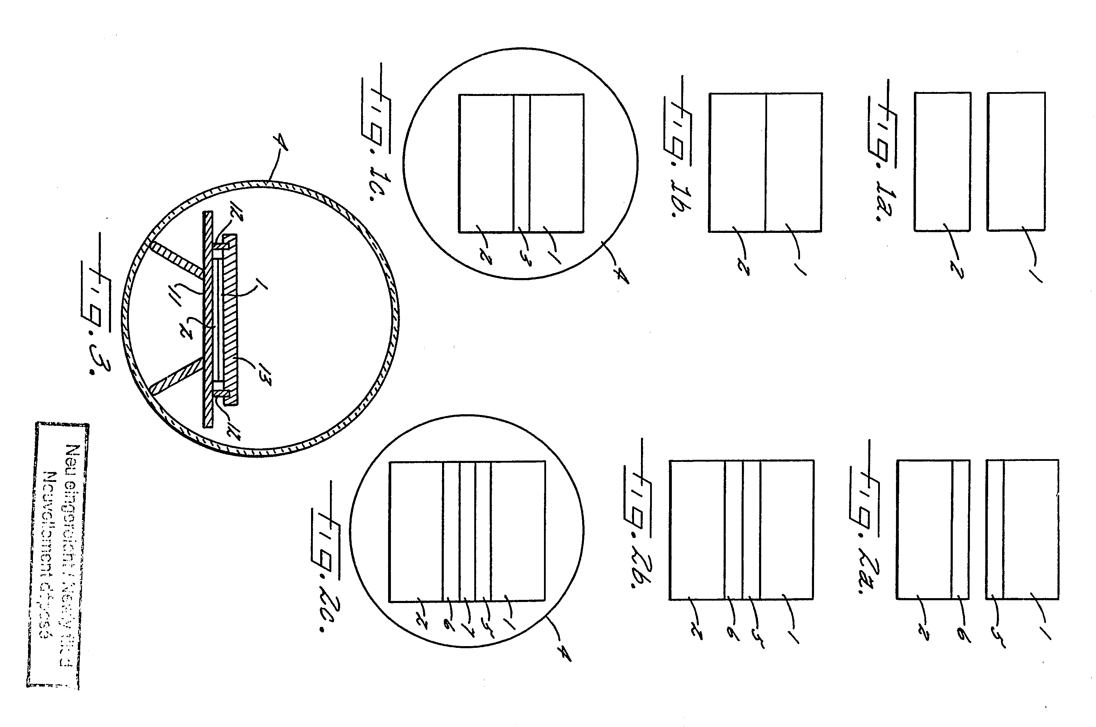

Referring now to Fig. 1a, two metal surfaces 1 and 2, to be bonded are shown. In Fig. 1b, the two metal surfaces to be bonded are placed in physical contact, and are pressed together. In Fig. 1c, the metal surfaces 1 and 2 are placed in furnace 4 containing an oxidizing ambient and heated, to form a thin oxide bond layer 3 therebetween.

Referring to Fig. 2, an alternative method of bonding metal surfaces by first forming an oxide on one or both surfaces to be bonded is shown. In Fig. 2a, oxide layers 5 and 6 are formed on the respective metal surfaces 1 and 2 to be bonded. In Fig. 2b, the oxide surfaces 5 and 6 are pressed together and then heated in a furnace 4 containing an oxidizing ambient atmosphere to bond the surfaces (Fig. 2c). In Fig. 2c an intermediate oxide bond layer 7 is shown between oxide layers 5 and 6. It will be understood by those having skill in the art that oxide layers 5, 6 and 7 form a single oxide layer which bonds the metal surfaces 1 and 2.

Referring now to Fig. 3, a quartz carrier 11, may be employed to hold a pair of flat surfaces to be bonded 1 and 2, in the furnace. To improve physical contact between surfaces, a quartz plate 13 may be placed on top of the pair of surfaces to act as a uniformly distributed weight source. The plate 13 preferably weighs several hundred grams. Pegs 12 may be employed to hold plate 13 in place. The quartz plate maintains the surfaces in intimate contact during insertion into the furnace, and during the bonding process, and provides for more consistent bonding.

According to the invention, bonding may take place in a standard annealing furnace or a rapid thermal annealing chamber, both of which are well known to those having skill in the art and will not be described in detail. Preferably, the bonding time for the standard furnace at the annealing temperature is at least 20 minutes, while in a rapid thermal annealing furnace, times between 2-4 minutes may be employed. An ambient atmosphere of dry oxygen and water vapor may be employed, with the amount of oxygen and water vapor not being critical as long as oxides are formed. In addition, HCl gas present to the extent of several percent by volume may also be present in the ambient atmosphere. Nitrogen, argon or other unreactive gases may also be employed with oxygen and water. The bonding temperature may vary from about 600°C to about 1150°C.

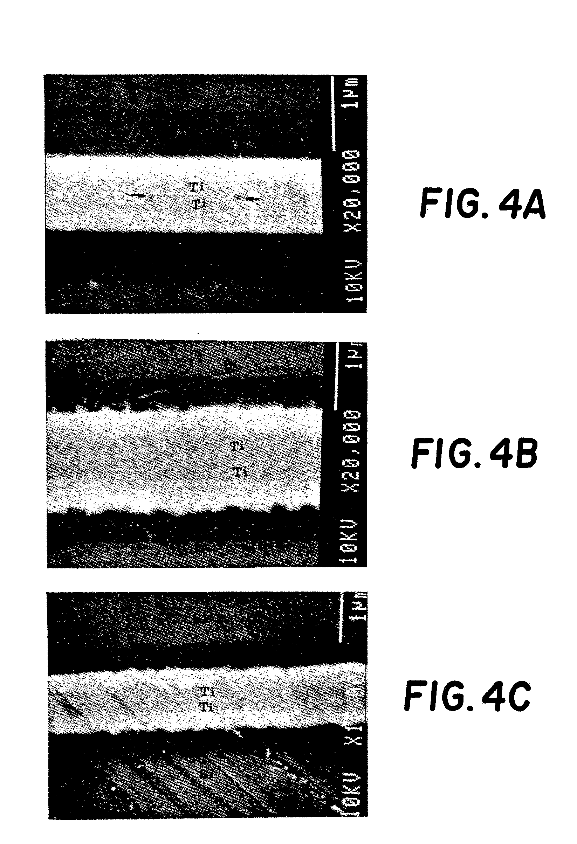

For example, it has been found that titanium (Ti) to Ti bonded very well in oxidizing atmospheres at temperatures greater than or near 700°C in a conventional furnace for twenty minutes. The electron microscopic pictures of the bonded samples are shown in Fig. 4a, b, and c. No irregularities at the bonded seams, x, y, z were noticed for bonding temperatures greater than or near 900°C. At 700°C, however, bond formation was almost complete.

Good bonding between Ti and Ti was found to occur in an oxidizing ambient atmosphere. While Applicants do not wish to be bound by any particular theory, the chemical bond formation in Ti-Ti structures is believed to result from formation of Ti-O-Ti bonds between two Ti structures. It has been found that these bonds may be formed between two bare metal surfaces which are pressed together as a result of microscopic surface irregularities which allow oxygen to penetrate throughout the interface of the two surfaces. It will be understood by those having skill in the art that this technique of bonding two metallic surfaces via oxidation may be extended to bond other flat and smooth metallic surfaces such as aluminum, or to metal alloys. It will also be understood by those skilled in the art that similar or dissimilar metals or metal alloys may be bonded. It will be further understood by those having skill in the art that this technique of bonding two metallic surfaces via oxidation may be employed by placing the metal surfaces on various substrates before bonding and then continuing by bonding the metal surfaces face to face.

This method of bonding metal surfaces according to the present invention may be employed in semiconductor-on-insulator (SOI) or semiconductor fabrication processes, as disclosed in the U.S. application, Serial No. 07/277,607, entitled "High Density Semiconductor Structure and Method of Making the Same." The disclosure of this co-pending application is expressly incorporated by reference.

In the drawings and specification, there have been disclosed typical preferred embodiments of the invention and, although specific terms are employed, they are used in a generic and descriptive sense only and not for purposes of limitation, the scope of the invention being set forth in the following claims.

## Claims

1. A method for bonding metal surfaces (1,2) comprising the steps of:
placing said metal surfaces in contact at a pressure therebetween which is substantially below the compressive bonding pressure of said metal surfaces; and
heating said metal surfaces in an oxidizing ambient atmosphere to a temperature substantially below the melting point of said metal surfaces, to form an oxide bond therebetween.

2. The method of Claim 1 wherein said placing step is preceded by the step of forming a surface oxide layer on at least one of said metal surfaces.

3. The method of Claim 1 wherein said metal surfaces are titanium.

4. The method of Claim 1 wherein said heating step comprises the step of heating said surfaces at a temperature between 600°C. and 1150°C.

5. The method of Claim 1 wherein said oxidizing ambient atmosphere consists essentially of oxygen and water vapor.

6. The method of Claim 1 wherein said metal surfaces are substantially planar.

7. The method of Claim 1 wherein said heating step comprises heating said metal surfaces in an oxidizing ambient atmosphere containing HCl.

8. A method for bonding metal pieces comprising the steps of:
forming an oxide on the areas of said metal pieces to be bonded;
placing said areas to be bonded in contact at a pressure therebetween which is substantially below the compressive bonding pressure of said metal pieces; and
heating the metal pieces in an oxidizing ambient atmosphere to a temperature substantially below the melting point of said metal pieces, to form the desired bond.

9. The method of Claim 8 wherein said metal pieces are titanium.

10. The method of Claim 8 wherein said heating step comprises the step of heating said pieces at a temperature between 600°C. and 1150°C.

11. The method of Claim 8 wherein said oxidizing ambient atmosphere consists essentially of oxygen and water vapor.

12. The method of Claim 8 wherein said metal pieces are substantially planar.

13. The method of Claim 8 wherein said heating step comprises heating said metal pieces in an oxidizing ambient atmosphere containing HCl.

14. The method of Claim 4 wherein said heating step comprises the step of heating said titanium surfaces at a temperature between 700°C and 900°C.

15. The method of Claim 9 wherein said heating step comprises the step of heating said titanium pieces at a temperature between 700°C and 900°C.

Fig. 1a.

Fig. 2a.

Fig. 1b.

Fig. 2b.

Fig. 1c.

Fig. 2c.

Fig. 3.

*FIG. 4A*

*FIG. 4B*

*FIG. 4C*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-201123 (N.V. PHILIPS GLOEILAMPENFABRIEKEN) * page 1, line 24 - page 2, line 4 * | 1-3, 8, 9 | B23K20/16 |
| Y | * page 2, line 32 - page 3, line 11; claims 1, 2, 5; figure * | 5, 6, 8, 11, 12 | |
| Y | EP-A-117671 (ALCAN INTERNATIONAL LIMITED) * page 3, lines 12 - 35 * | 5, 6, 8, 11, 12 | |
| A | GB-A-900804 (JOHNSON, MATTHEY AND COMPANY LIMITED) * page 3, lines 16 - 40; claim 3 * | 3, 4, 9, 10 | |

TECHNICAL FIELDS SEARCHED (Int. Cl.5 )

B23K

The present search report has been drawn up for all claims

| Place of search | Date of completion of the search | Examiner |
|---|---|---|
| THE HAGUE | 05 MARCH 1990 | ARAN D.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)